# EUROPEAN PATENT APPLICATION

(11) **EP 1 092 528 A2**
(43) Date of publication of application: **18.04.2001**
(21) Application number: 00121954.2
(22) Date of filing: 09.10.2000
(51) Int. Cl.: B29C 69/00, B32B 31/12, B32B 31/20, B32B 35/00

(54) **Method, apparatus and system for postforming thermoplastic sheets**

(30) Priority: 15.10.1999 US 419267
(71) Applicant: Premark RWP Holdings, Inc., Wilmington, Delaware 19801 (US)
(72) Inventor: Moore, Steven J., Temple, Texas 76502 (US); Owens, David M., Georgetown, Texas 78628 (US); Billeck, Billy Joe, Jr., Rogers, Texas 76569 (US); Moore, Kelly, Little River, Texas 76554 (US); Ingrim, Michael A., Belton, Texas 76513 (US); Trethewey, Bruce Rodney, Jr., Temple, Texas 76502 (US); Rabroker, Beth, a., Lott, Texas 76656 (US)
(74) Representative: Patry, Didier Marcel Pierre

(57) **Abstract**

Postforming a thermoplastic sheet, such as solid surface laminate material (SSL), to a substrate having a planar surface and an edge with a desired profile, by heating a portion of the thermoplastic sheet proximate to the edge. Adhesive attaches the thermoplastic sheet to the planar surface and edge of the substrate. The adhesive may be solvent-based contact adhesives or water-based specialty adhesives. The composite formed by the attached thermoplastic sheet and substrate may be used for counter-tops, vanity tops, bath and shower surfaces, furniture surfaces and the like. Heating of the portion of the thermoplastic sheet may be by focused line heating, conventional heating and a heat shield, a combination of focused heating and conventional heating, or by just conventional heating. The heated portion of the thermoplastic sheet is preferably between about 275 (135) and 320 (160) degrees Fahrenheit (° Celsius) before bending. An optional protective film may be placed over the front side portion of the thermoplastic sheet being heated to minimize surface defects thereto.

## Description

This application is related to commonly owned European Patent Application Number 98 305 713.4, published on January 27, 1999 under EP 0 893 473 and European Patent Application Number 99 119 996, published on April 19, 2000 under EP 0 994 147, both of which are hereby incorporated by reference.

The present invention relates to postforming a thermoplastic sheet, such as solid surface laminate (SSL), to a substrate having a planar surface and an edge with a desired profile, and more particularly, to bending under heat and attaching with adhesive the thermoplastic sheet to the substrate without damaging, marring or discoloring the surface of the thermoplastic sheet.

High-pressure decorative laminate (HPDL) is used in the building and furniture industries for counter and table tops, bathroom and kitchen counter surfaces, wall paneling, partitions and doors, and furniture surfacing. HPDL is composed of layers of paper saturated with thermoset resins that form a composite when exposed to high pressure and temperatures. Postforming grade HPDL is produced by decreasing the cure of the thermoset resins that are saturated in the paper. This reduction of cure allows this grade of laminate to soften and bend during postforming of the laminate to a substrate.

HPDL postforming is performed primarily on a continuous production line produced specifically for this application. Typical manufactures of postforming equipment are: Midwest Automation, Evans Machinery, Ima, etc. The basic HPDL postforming process typically includes the steps of producing substrate blanks having a desired edge shape, bonding the HPDL to a planar portion of the substrate blanks, and bending the HPDL while applying heat to conform to the surface shape of the edge of the substrate blanks. Heat is applied to the HPDL until a temperature is reached of approximately 325°F (163° Celsius). Then the HPDL is formed to the edge surface of the substrate blanks by passing the composite substrate/HPDL through a series of rollers until the final shape is obtained (dependent on core shape / roller configuration).

Recently, a thermoplastic acrylic sheet composition has been disclosed in European document EP 0 893 473, entitled "Thermoplastic Acrylic Sheet Compositions and Their Use as Substitutes for High Pressure Decorative Laminate and European document EP 0 994 147, entitled "Extruded Unbalanced Solid Surface Composites and Method for Making and Using Same," both of which are incorporated by reference herein. The thermoplastic acrylic sheet composition may be referred to hereinafter as "solid surfacing laminate" (SSL) or "thermoplastic sheet."

The embodiments of the present invention disclosed hereinbelow provide a method, apparatus and system for postforming and attaching thermoplastic sheets onto substrates. Each of the embodiments comprise a substrate blank having a planar surface and an edge formed to a desired profile. The thermoplastic sheet is attached to the planar surface of the substrate with adhesive and then heat is applied to a portion of the thermoplastic sheet proximate to the edge having the desired profile. When the heated portion of the thermoplastic sheet reaches a desired temperature, the sheet is bent so as to substantially conform to the shape of the edge. Adhesive on the edge of the substrate attaches the bent portion of the thermoplastic sheet in contact therewith to the substrate edge.

An embodiment of the invention utilizes focused line heating which applies heat to a portion of the SSL which is in the area of the bend around the edge of the substrate. Heat is preferably focused onto the side of the SSL that will come in contact with the substrate (back side thereof) so as to minimize particulate (contained within the SSL) rise to the exposed surface or front side of the SSL. Focused heat may also be applied to the front side of the SSL, preferably, with a film mask between the focused heat source and the front side surface of the SSL for protection thereof. Particulate rise is also minimized when the film mask is placed between the SSL and the focused heat source, especially at the radius edges. The focused heat further minimizes a "ripple or wave" in the front surface of the SSL.

Another embodiment utilizes a heat shield to protect the outer edges of the SSL from conventional heating, thus heat is applied only where the bending is to occur. The heat shield is preferably made from high heat resistant material, i.e., metal, and may be hollow or have channels therein for air or water cooling. The heat shield substantially reduces the rippling effect on the surface of the SSL.

Still another embodiment of the invention utilizes a combination of focused and conventional (unfocused) heating. The SSL is heated on both the front and back sides. A film mask may be placed between the front side and the heat source. Preferably, the front side is heated with a focused heat source and the back side is heated with the conventional heat source.

Yet another embodiment utilizes conventional heat sources for heating of both the front and back sides of the SSL. Preferably, a film mask between the front side of the SSL and the heat source may be used to minimize surface defects such as particulate rise and rippling.

In the embodiments of the invention, after application of heat to the SSL, bending of the SSL so as to conform to the edge of the substrate is preferably performed with a series of rollers that help form the SSL into its final edge profile. The rollers may be composed of rubber, silicone, steel and the like, and may or may not conform to the shape of the final edge profile. Most preferably, the rollers will conform to the shape of the edge profile so as to assist the surface of the SSL material in obtaining a precision fit to that edge profile.

SSL is adapted for edge finishing after heating and bending. Edge finishing may be necessary especially when only conventional heating is used to heat the SSL before bending. Edge finishing may comprise a combination of profile sanding, more commonly known as belt and block sanding, and rotational sanding. Profile sanding may be used to remove particulate rise and other surface defects caused during the postforming process. However, profile sanding may leave behind directional sanding lines. These directional sanding lines are typically aligned parallel with the edge of the substrate and may be difficult to properly remove by, for example, hand sanding. Rotational sanding has been found to effectively remove these directional lines.

Another embodiment of the invention adds the step of coving the SSL to produce a postformed, for example but not limitation, countertop with a continuous backsplash. Standard coving machines may be used with SSL with some modifications: In a first approach, the SSL is heated on both sides. Preferably, the surface of the SSL should be covered with film, especially in the area where the heating rod will be applied. The film preferably will be heat resistant above the temperature of the heating rod so that it does not melt into the surface of the SSL. The temperature of the heating rod is preferably between 205°F (96° Celsius) and 215°F (102° Celsius). An auxiliary radiant heater may be used to provide heat to the backside of the SSL (through a scored slot in the substrate). The heater on the backside of the SSL is preferably set so the surface temperature is greater than 300°F (149° Celsius). The SSL/substrate may be exposed to this combination of heat until forming temperature is reached (same as postforming temperature above). Then the top is bent toward the heating rod until the desired angle of bend is achieved. The backside heater is moved and a cove stick is installed between the two pieces of the substrate (counter top and backsplash).

In a second approach, the SSL is heated from the backside only. The temperature of the heater depends on the distance from the surface of the SSL, but preferably produces a temperature greater than 300°F (149° Celsius) on the surface of the SSL. Once the SSL is heated to the desired temperature, the cove bend is formed around a non-heated rod until the desired bend is achieved. The cove stick is installed between the two pieces of the substrate and the sheet is allowed to cool.

An advantage of the present invention is that focused line heating of the SSL minimizes particulate rise and rippling of the postformed surface of the SSL.

Another advantage is that a heat shield may be used with conventional heaters substantially reduces rippling of the postformed surface of the SSL.

A feature of the present invention is using rollers that are contoured to the profile of the substrate edge over which the SSL is to be formed.

Another feature of the present invention is putting a cove bend in the SSL so as to postform a countertop with a continuous backsplash.

Still another feature is using focused heat sources either at the front side, backside or both sides to heat only the portion of the SSL proximate to the substrate edge that the SSL is being conformed thereto.

An other object of the invention is a method for postforming a thermoplastic sheet on a substrate, said method comprising the steps of:
providing a substrate having a planar surface and an edge;
forming a desired profile on the edge of said substrate;
applying a first coat of adhesive to the planar surface and the edge of said substrate;
providing a thermoplastic sheet having a backside and a front side; applying a second coat of adhesive to the backside of said thermoplastic sheet;
placing the backside of said thermoplastic sheet on the planar surface of said substrate, whereby the backside of said thermoplastic sheet attaches to the planar surface of said substrate;
heating a portion of said thermoplastic sheet proximate to the edge of said substrate to a desired temperature; and
bending the heated portion of said thermoplastic sheet to conform to the edge having the desired profile, whereby said thermoplastic sheet attaches to the edge of said substrate.

According to another feature of the invention, the step of heating a portion of said thermoplastic sheet proximate to the edge of said substrate is done with a focused heat source.

According to another feature of the invention, the focused heat source heats the backside of said thermoplastic sheet.

According to another feature of the invention, the focused heat source heats the front side of said thermoplastic sheet.

According to another feature of the invention, this method future comprises the step of placing a heat resistant film between the focused heat source and the front side of said thermoplastic sheet.

According to another feature of the invention, the step of heating a portion of said thermoplastic sheet proximate to the edge of said substrate is done with a first focused heat source heating the front side of said thermoplastic sheet and a second focused heat source heating the backside of said thermoplastic sheet.

According to another feature of the invention, this method further comprises the steps of:
providing a groove in said substrate such that a portion of the backside of said thermoplastic sheet is exposed where a cove bend is to be made in said thermoplastic sheet, a first and a second portion of said substrate being on either side of the groove;
heating the backside of said thermoplastic sheet through the groove in said substrate;
   bending said thermoplastic sheet around a cove bending rod; and
applying a cove stick between the first and second portions of said substrate and at the cove bend on the backside of said thermoplastic sheet.

According to another feature of the invention, the temperature at the backside of said thermoplastic sheet is greater than 300 degrees Fahrenheit (149 degrees Celsius) during the step of bending.

According to another feature of the invention, the method further comprises the steps of:
placing a heat resistant film between the front side of said thermoplastic sheet and the cove bending rod; and
heating the cove bending rod to a temperature lower than the temperature of the backside of said thermoplastic sheet.

According to another feature of the invention, the temperature at the backside of said thermoplastic sheet is greater than 300 degrees Fahrenheit (149 degrees Celsius) and the temperature of the heated cove bending rod is between about 205 (96) and 215 (102) degrees Fahrenheit (degrees Celsius) during the step of bending.

An other object of the invention is an apparatus for postforming a thermoplastic sheet on a substrate, said apparatus comprising:
a first heater adapted for heating a front side of a portion of a thermoplastic sheet;
a second heater adapted for heating a backside of the portion of the thermoplastic sheet, wherein the heated portion of the thermoplastic sheet is proximate to an edge of a substrate, the edge having a desired profile; and
a bender for bending the heated portion of the thermoplastic sheet to conform to the profile of the edge of the substrate.

According to another feature of the invention, the first and second heaters are focused line heaters.

According to another feature of the invention, the first and second heaters are unfocused heaters

According to another feature of the invention, the apparatus further comprises a heat shield around another portion of the thermoplastic sheet not proximate to the edge of the substrate.

According to another feature of the invention, the portion of the thermoplastic sheet is greater than 300 degrees Fahrenheit (149 degrees Celsius).

According to another feature of the invention, the apparatus further comprises a cove bending rod for further bending the thermoplastic sheet into a cove shape.

According to another feature of the invention, the cove bending rod is heated to a temperature from about 205 (96) to 215 (102) degrees Fahrenheit (degrees Celsius).

An other object of the invention is an article of manufacture, comprising:
a substrate having a planar surface and an edge, the edge having a desired profile;
a first coat of adhesive on the planar surface of said substrate;
a thermoplastic sheet attached to the planar surface of said substrate by the first coat of adhesive such that there is substantially no excess adhesive buildup between said thermoplastic sheet and the planar surface and edge of said substrate;
a second coat of adhesive on the edge of said substrate; and
a portion of said thermoplastic sheet proximate to the edge of said substrate being heated and bent to conform to the edge having the desired profile, wherein the second coat of adhesive attaches said thermoplastic sheet thereto.

Other and further features and advantages will be apparent from the following description of presently preferred embodiments of the invention, given for the purpose of disclosure and taken in conjunction with the accompanying drawings.
Figure 1 is a schematic elevational cross-section view of a substrate and SSL being laminated together;
Figures 2A and 2B are graphs indicating the softening/forming behavior of SSL;
Figure 3 is a schematic elevational cross-section view of a portion of the SSL being heated at the bending area by focused line heat sources, according to an embodiment of the present invention;
Figure 4 is a schematic elevational cross-section of the SSL being heated by conventional heat sources and protected by heat shields, according to another embodiment of the present invention;
Figure 5 is a schematic elevational cross-section view of a portion of SSL being heated at the bending area by a focused heat source at the front side and a conventional heat source at the back side of the SSL, according to still another embodiment of the present invention;
Figure 6 is a picture of a profile sander; and
Figure 7 is a schematic elevational cross-section view of a portion of the SSL being heated at the bending area by a heat source spaced away from the backside of the SSL and a rod shaped heat source on the front side of the SSL with a protective film located between the surface of the SSL and the rod shaped heat source, according to yet another embodiment of the present invention.

The present invention is a system, method and apparatus for postforming and attaching thermoplastic sheets (SSL) onto substrates without damaging, distorting or discoloring the surface of the thermoplastic sheets. The resulting composite may be used for a variety of building and furniture applications. When postforming and attaching the SSL onto the substrate, the embodiments of the present invention comprise the following manufacturing steps: 1) production of substrate, 2) surface to substrate bonding, 3) edge adhesive application, 4) heat/bending, and 5) edge finishing. In addition, the step of 6) coving may be used to postform, for example but not limitation, a countertop with a continuous backsplash.

Referring now to the drawings, the details of preferred embodiments of the present invention are schematically illustrated. Like elements in the drawings will be represented by like numbers, and similar elements will be represented by like numbers with a different lower case letter suffix.

### Production of Substrate:

The substrate may be produced from a variety of products including plastic, wood or a combination of both. The preferred composition of the substrate is wood, with particleboard or medium density fiberboard (MDF) the most preferred. The thickness of the substrate may range preferably from about ¼ (6.35 mm) to 2 inches (50.8 mm), and most preferably from about ¾ (19 mm) to 1½ inches (38 mm) particleboard and MDF. A substrate thickness less than ¾ inch (19 mm) or greater than 1½ inches (38 mm) may also be used with the embodiments of the invention.

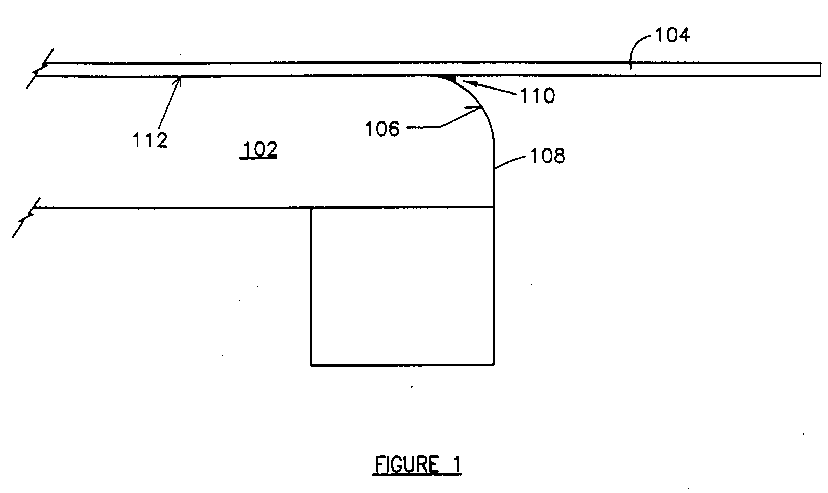

Referring now to Figure 1, a schematic elevational cross-section view of a substrate and SSL being laminated together is illustrated. The substrate is generally indicated by the numeral 102 and the thermoplastic sheet or SSL is indicated by the numeral 104. The substrate 102 is machined so that an edge 108 profile 106 (shape) is substantially equivalent to the final profile needed. Postforming is different than thermoforming because in postforming only localized heating is used and the mold (i.e. the edge profiled substrate) is part of the final composite. The machining of the edge profile is critical because of the thermoplastic nature of SSL. Thus it is important that the substrate edge 108 be free of bumps, burrs and other defects.

Any bumps, burrs or other defects may be telegraphed through the surface of the SSL 104 and be noticeable thereon. An MDF substrate 102 typically provides the smoothest surface but particleboard can be sanded to provide a usable profile smoothness. Also, the internal composition of the particleboard can be modified so that the common coarse grain wood fibers are replaced with a finer grade. This makes machining the edge profiles on particleboard substrate smoother.

### Surface to Substrate Bonding:

Several methods may be used to bond the SSL 104 to the substrate 102. The method selected is dependent on the substrate chosen, the adhesive needed to bond the selected substrate to SSL and the glue application equipment available to the postformer. Regardless of the bonding method or adhesive chosen, the application of the adhesive is critical. The adhesive cannot be allowed to buildup and dry at the SSL/substrate interface. The adhesive build-up will prevent the SSL from forming to the preferred edge profile, e.g., see generally adhesive build-up 110.

Under most conditions, the adhesives on the substrate deck 112 and edge 108 are applied at different stages during the postforming process. Application of adhesive on both the substrate deck 112 and edge 108 may be incorporated into one step if the adhesive selected has the ability to be reactivated under heat exposure plus has a high enough hot green strength to hold the postformed SSL in place until full adhesive cure occurs. The incorporation of the two adhesives into one step is dependent on the application equipment the postformer decides to use.

### Edge Adhesive Application:

Typically, application of the edge adhesive is in a different step than the aforementioned substrate deck adhesive. One adhesive or several adhesives may be required depending on the composition of the substrate 102. Regardless of the substrate chosen, the preferred adhesive application is two-sided, or in other words, both the substrate 102 and the SSL 104 are coated with adhesive. The coverage rate of the adhesive most preferably should be as close to 100 % as possible.

The SSL 104 has successfully been postformed using both solvent-based contact adhesives and water-based specialty adhesives. Solvent-based contact adhesives have been applied and allowed to dry under 1) ambient conditions, or 2) by forced drying using air to both the SSL 104 and the substrate 102. Their reactivation is accomplished by the heating mechanism on the postforming line. The water based specialty adhesives are applied inline and partially dried with either the postforming heaters or additional forced air heaters. Water based adhesives typically have longer cure times and may require a longer series of hold down rollers after edge forming.

### Heat/Bending:

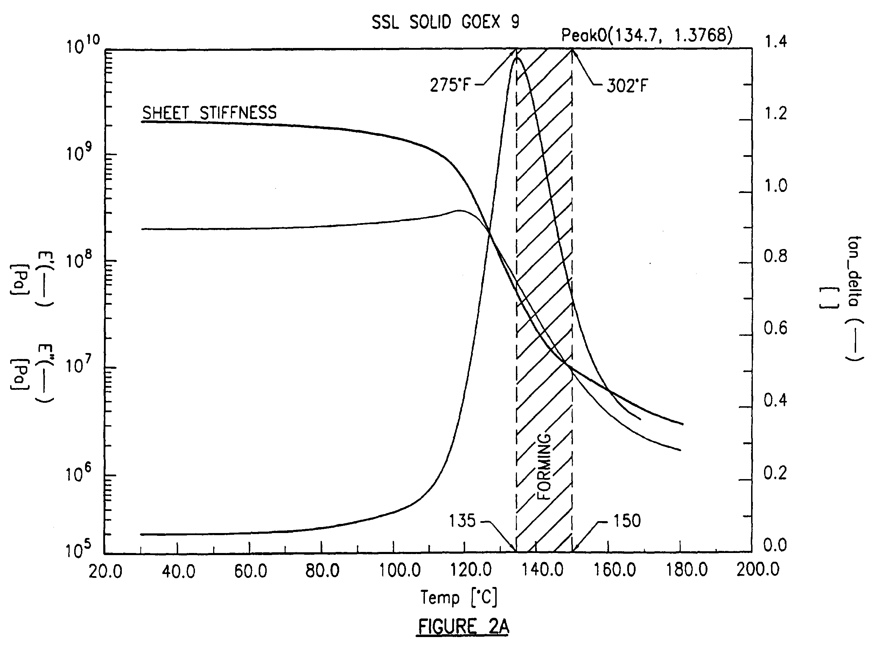

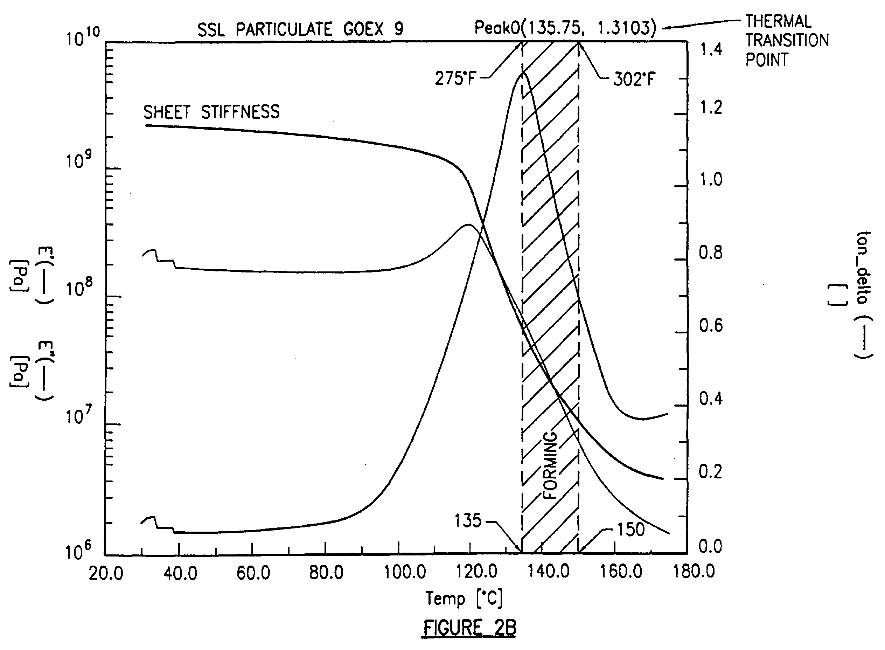

SSL postforms best when it is heated to surface temperatures preferably between about 270°F (132.23° Celsius) and 320°F (160° Celsius). Referring now to Figures 2A and 2B, graphs indicating the softening/forming behavior of SSL are illustrated. Initial temperatures were initially proposed based on DMTA curves produced from an SSL solid and particulate co-extruded sheet. The curves represented in Figures 2A and 2B indicate softening/forming behavior at temperatures greater that 275°F (135° Celsius). These temperatures were confirmed by trial and error on a Midwest Postformer during test evaluations in the inventor's fabrication shop.

The location at which heat is applied to the SSL sheet is a critical parameter. Improper heat application can cause the SSL material to soften to such a degree that it begins to "ripple or wave." These waves may become permanent features of the postformed countertop that cannot be removed. Also, improper heating and bending may cause undesirable textures or color changes on the surface of the SSL countertop (i.e., entrained particulate will begin to rise out of the top of the SSL and cause surface roughness).

It has been determined by the inventors of the present invention that focused line heating is preferred over broad band heaters as the method of heat application to the SSL 104. Also, a newly developed film by Polymask (3M division) helps minimize surface defects. This film may be used during the postforming process but is not required. The following list provides a summary of preferred heat configurations that may be used to postform the SSL 104. They are listed in order of preference, from most preferred (1) to least preferred (4):

### 1. Focused Line Heating:

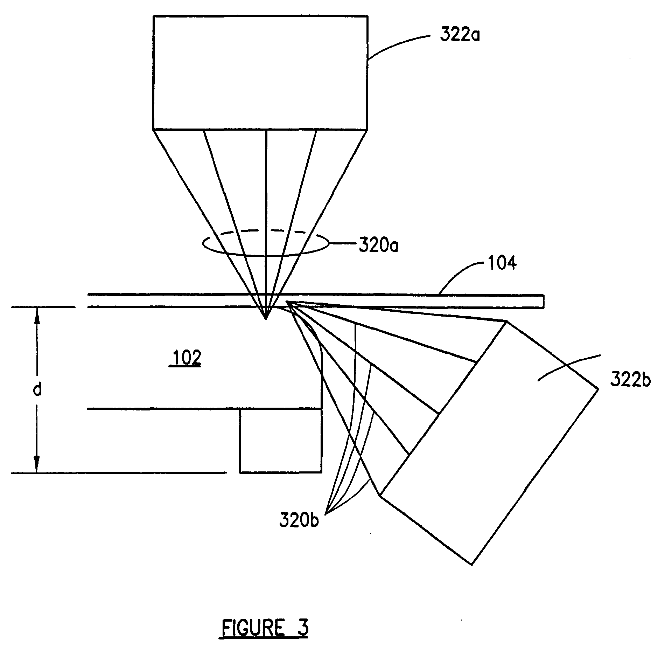

Referring to Figure 3, a schematic elevational cross-section view of a portion of the SSL being heated at the bending area by focused line heat sources, according to an embodiment of the present invention, is illustrated. Focused line heat to the front side and backside of the SSL 104, represented by the numerals 320a and 320b, respectively, is focused onto the critical bend areas of the SSL 104. Focused line heaters 322a and 322b may be for example quartz heaters as produced by Research Inc., model # 5193. For a 90 degree bend as illustrated in Figure 3, the more intense heat is preferably applied to the backside (bottom of the SSL in the illustration) of the SSL 104. By focusing the heat onto the backside of the SSL 104, particulate rise is thereby minimized. Focused heat also may be applied to the front side (top of the SSL in the illustration) of the SSL 104. A Polymask film, part #YR2688RC of preferably 1.5 mil thickness (co-extruded polyester and acrylic) placed on the front side surface of the SSL 104, especially on the radius edges, helps minimize particulate rise to the surface of the SSL 104. The focused heat 320a and 320b helps minimize the 'rippling' effect discussed hereinabove.

### 2. Heat Shield:

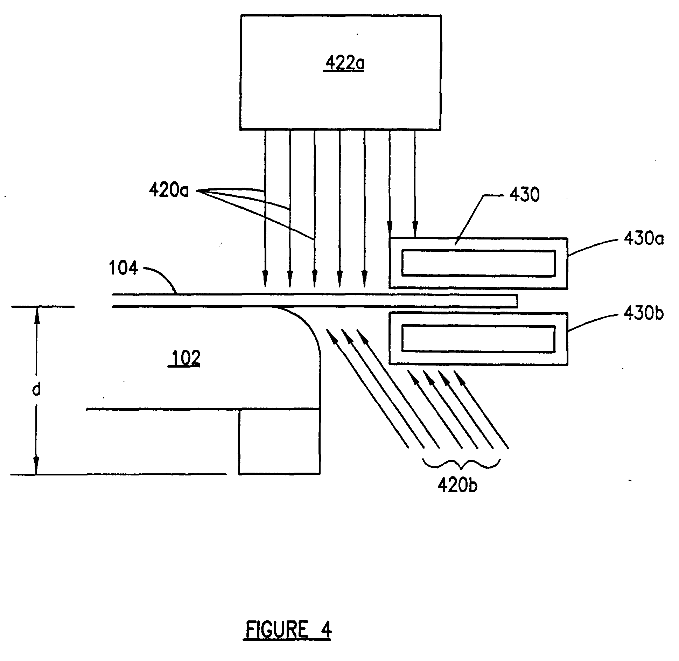

Referring now to Figure 4, a schematic elevational cross-section of the SSL being heated by conventional heat sources and protected by heat shields, according to another embodiment, is illustrated. Conventional ceramic or quartz heaters 422a (422b not shown) typically found on standard postforming machines may be used with this embodiment. Heat 420a and 420b (from heat sources 422a and 422b not shown) is applied to the area of the SSL 104 where the bending is to occur. The heat 420a and 420b is 'shielded' from the outer edges of the SSL 104 by using a heat shield 430, represented by upper portion 430a and lower portion 430b. The heat shield 430 may be manufactured from high heat resistant material (i.e., metal or other heat resistant material). Preferably, the heat shield may be hollow or have channels therein for air or water cooling. The outer edge of the SSL 104 is thereby shielded from the heat 420a and 420b by passing between the upper portion 430a and the lower portion 430b of the heat shield 430. The heat shield 430 helps to substantially reduce rippling of the SSL 104, but the intense top heat 420a may still cause some particulate rise.

### 3. Combination Focused and Conventional Heating:

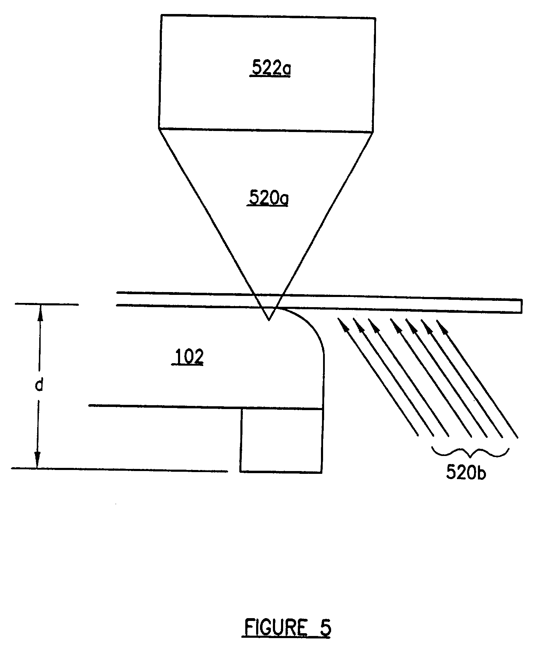

Referring now to Figure 5, a schematic elevational cross-section view of a portion of SSL being heated at the bending area by a focused heat source at the front side and a conventional heat source at the backside of the SSL is illustrated. The SSL 104 is heated from both sides. Polymask film (not shown) may be applied to the surface (front side) of the SSL 104. The surface has focused line heating 520a where the bottom side of the SSL 104 has conventional heat 520b. The resulting bend may produce a front side (top) surface that may be acceptable depending on the edge radius attempted but postfinishing may be required.

### 4. Conventional Heating:

Conventional heating is typically the method used on commercially available postforming machines. Application of the Polyfilm over the front side of the SSL 104 helps minimize surface defects but postfinishing generally will be required.

After heat is applied as described hereinabove, the surface material (SSL in this case) moves through a bending bar to a series of rollers (not illustrated) that help form it into the final required edge profile. The shape cut into the substrate edge (profile) and the position of these rollers dictate the final profile that the bent SSL 104 will assume. For each different profile, the position of these rollers will change. These rollers can be composed of rubber, silicone, or steel. These rollers typically do not conform to the shape of the final profile. These type of rollers will work but the preferred roller is contoured to assist the surface material in obtaining a tight fit to the final profile. By following the above heating and bending recommendations, SSL can obtain tighter radii than HPDL and can produce edge profiles with a higher degree of detail.

### Edge Finishing:

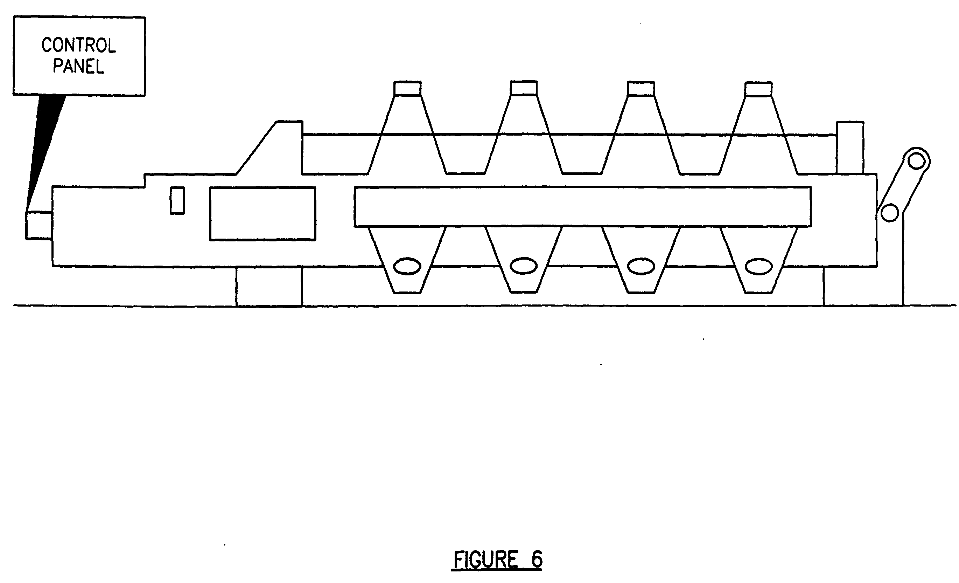

As mentioned hereinabove, edge finishing may be required on edge profiles sustaining particulate rise during the heating process of the methods disclosed hereinabove. Edge finishing can be achieved through a combination of profile sanding, more commonly known as belt and block sanding, and rotational sanding. Profile sanding removes particulate raise caused during postforming. Referring to Figure 6, a picture of a typical profile sander is illustrated. Profile sanders are commercially available from, for example, Delle Vedove, Hesseman, and Fletcher Machinery. They may require different belt and block configurations for each profile run. The number of profile sander stations needed is dependent on the profile (higher detail, more stations). An example of a semi-gloss finish on an SSL formed edge (three sanding steps are required): 220 grit sanding belt, 320 grit sanding belt and a very fine scotch-brite disc with waffle flanges.

Profile sanding removes surface defects but leaves behind direction sanding lines. These direction lines follow parallel to the length of the substrate and can be difficult to remove by ordinary hand sanding. These lines have been successfully removed by rotation sanding. Rotational (spindle) sanders are commercially available from Fladder. These machines sand in a rotational motion to remove directional lines caused by profile sanding. Different types of finishes can be applied depending on what type of sand paper/scotch brite is placed on the rotational shaft.

### Coving:

Coving may be an added step when a postformed countertop with a continuous backsplash is desired. Coving machines are manufactured by many of the same companies that produce postforming machines. Prior art heating of the surface of the laminate is with a heating rod that comes in direct contact with the surface of the laminate. It has been found that this type of heating will leave the SSL surface damaged (melting occurs). Standard coving machines may be used with SSL, but a few modifications to the operation of these coving machines is desirable.

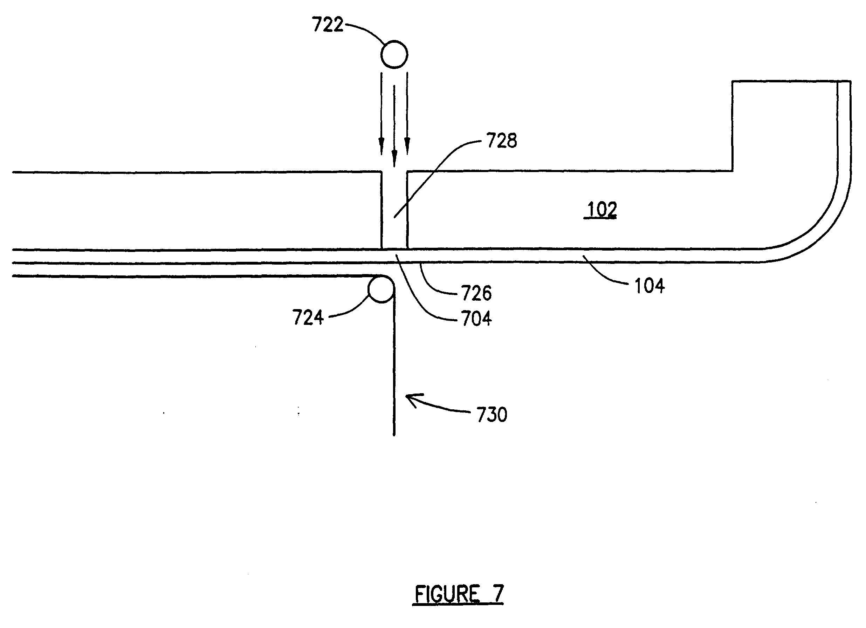

Referring now to Figure 7, a schematic elevational cross-section view of a coving operation is illustrated. A portion 704 of the SSL 104 is being heated at the bending area by a heat source 722 spaced away from the backside of the SSL 104 and another rod shaped heat source 724 of a coving machine 730 is located on the front side of the SSL 104. A protective film 726 may be located between the surface of the SSL 104 and the rod shaped heat source 724. When coving SSL, the radius of the heating rod 724 determines the cove radius. Two preferred methods of coving SSL are as follows:

In the first method, the SSL 104 has heat applied to both sides. The surface of the SSL 104 is preferably covered with the film 726, most preferably in the area where the heating rod 724 will be applied. The film 726 preferably is heat resistant above the temperature of the heating rod 724 so that it does not melt onto the surface of the SSL 104. The heating rod 724 is preferably set so that a temperature between 205 and 215 degrees Fahrenheit is maintained. The heater 722 is a radiant heater and is used to provide heat to the backside of the SSL 104 through the scored slot 728 in the substrate 102. The heater 722 on the backside of the SSL 104 is set so the surface temperature of the SSL 104 is greater than about 300 (149) to 320 (160) degrees Fahrenheit (° Celsius). The distance of the heater 722 preferably is about 1 inch from the substrate 102. The SSL 104 and the substrate 102 are thus exposed to this combination of heat from the heaters 722 and 724 until forming temperature is reached (same as postforming temperature disclosed hereinabove). Once the forming temperature is reached, the top of the SSL 104 is bent toward the heating rod 724 until a desired angle, such as for example 90 degree, bend is achieved. Once the SSL 104 has been bent, the backside heater 722 is moved and a cove stick (not illustrated) is installed with the substrate 102.

In the second method, the SSL 104 is heated only from the backside. The temperature of the heater 722 is dependent on the distance from the backside of the SSL 104, but the heat supplied should be such so that the SSL 104 surface reaches a temperature greater than 300 degrees Fahrenheit. Once the SSL 104 is so heated, the cove bend is formed around the non-energized heating rod 724a (not illustrated) on the coving machine until a 90 degree bend is achieved. The cove stick is applied thereafter and the laminated assembly is allowed to cool.

The present invention, therefore, is well adapted to carry out the objects and attain the ends and advantages mentioned, as well as others inherent therein. While the present invention has been depicted, described, and is defined by reference to particular preferred embodiments of the invention, such references do not imply a limitation on the invention, and no such limitation is to be inferred. The invention is capable of considerable modification, alternation, and equivalents in form and function, as will occur to those ordinarily skilled in the pertinent arts. The depicted and described preferred embodiments of the invention are exemplary only, and are not exhaustive of the scope of the invention. Consequently, the invention is intended to be limited only by the spirit and scope of the appended claims, giving full cognizance to equivalents in all respects.

## Claims

1. A method for postforming a thermoplastic sheet on a substrate, said method comprising the steps of:
providing a substrate having a planar surface and an edge;
forming a desired profile on the edge of said substrate;
applying a first coat of adhesive to the planar surface of said substrate;
placing a thermoplastic sheet on the first coat of adhesive on the planar surface of said substrate such that there is substantially no excess adhesive buildup between said thermoplastic sheet and the planar surface and edge of said substrate, whereby the first coat of adhesive attaches said thermoplastic sheet to the planar surface of said substrate;
applying a second coat of adhesive to said substrate edge having the desired profile;
heating a portion of said thermoplastic sheet proximate to the edge of said substrate to a desired temperature; and
bending the heated portion of said thermoplastic sheet to conform to the edge having the desired profile, wherein the second coat of adhesive attaches said thermoplastic sheet thereto.

2. The method according to claim 1, wherein the step of heating a portion of said thermoplastic sheet proximate to the edge of said substrate is done with a focused heat source.

3. The method according to claim 2, wherein the focused heat source heats the backside of said thermoplastic sheet.

4. The method according to claim 2, wherein the focused heat source heats the front side of said thermoplastic sheet.

5. The method according to claim 4, future comprising the step of placing a heat resistant film between the focused heat source and the front side of said thermoplastic sheet.

6. The method according to claim 1, wherein the step of heating a portion of said thermoplastic sheet proximate to the edge of said substrate is done with a first focused heat source heating the front side of said thermoplastic sheet and a second focused heat source heating the backside of said thermoplastic sheet.

7. The method according to claim 1, wherein the step of heating a portion of said thermoplastic sheet proximate to the edge of said substrate comprises the steps of:
heating the front side of said thermoplastic sheet with a first unfocused heat source;
heating the backside of said thermoplastic sheet with a second unfocused heat source; and
placing a heat shield between a portion of the first unfocused heat source and a portion of the second unfocused heat source so as to shield another portion of said thermoplastic sheet not proximate to the edge of said substrate.

8. The method according to claim 7, future comprising the step of placing a heat resistant film between the first unfocused heat source and the front side of said thermoplastic sheet.

9. The method according to claim 1, wherein the step of heating a portion of said thermoplastic sheet proximate to the edge of said substrate is done with a first focused heat source heating the front side of said thermoplastic sheet and a second unfocused heat source heating the backside of said thermoplastic sheet.

10. The method according to claim 9, future comprising the step of placing a heat resistant film between the first focused heat source and the front side of said thermoplastic sheet.

11. The method according to claim 1, after the step of bending the heated portion of said thermoplastic sheet, future comprising the step of finishing the portion of said thermoplastic sheet attached to the edge having the desired profile.

12. The method according to claim 1, wherein the step of finishing is done with a profile sander.

13. The method according to claim 1, wherein the step of finishing is done with a profile sander and then a rotational sander.

14. The method according to claim 1, wherein the step of heating raises the temperature of the portion of said thermoplastic sheet to at least 275 degrees Fahrenheit (135 degrees Celsius).

15. The method according to claim 1, wherein the step of heating raises the temperature of the portion of said thermoplastic sheet to between about 275 to 320 degrees Fahrenheit (135 to 160 degrees Celsius).

16. The method according to claim 1, wherein the step of bending comprises the steps of:
bending the heated portion of said thermoplastic sheet with a bending bar; and conforming the bent portion of said thermoplastic sheet to the edge having the desired profile with rollers.

17. The method according to claim 16, wherein the rollers are made of a material selected from the group consisting of rubber, silicone and steel.

18. The method according to claim 16, wherein the rollers are made of a metal.

19. The method according to claim 16, wherein the rollers are made of a non-metal.

20. The method according to claim 16, wherein the rollers conform to the shape of the desired profile of the substrate edge.

21. The method according to claim 1, further comprising the steps of:
providing a groove in said substrate such that a portion of the backside of said thermoplastic sheet is exposed where a cove bend is to be made in said thermoplastic sheet, a first and a second portion of said substrate being on either side of the groove;
heating the backside of said thermoplastic sheet through the groove in said substrate;
bending said thermoplastic sheet around a cove bending rod; and
applying a cove stick between the first and second portions of said substrate and at the cove bend on the backside of said thermoplastic sheet.

22. The method according to claim 21, wherein the temperature at the backside of said thermoplastic sheet is greater than 300 degrees Fahrenheit (149 degrees Celsius) during the step of bending.

23. The method according to claim 21, further comprising the steps of:
placing a heat resistant film between the front side of said thermoplastic sheet and the cove bending rod; and
heating the cove bending rod to a temperature lower than the temperature of the backside of said thermoplastic sheet.

24. The method according to claim 23, wherein the temperature at the backside of said thermoplastic sheet is greater than 300 degrees Fahrenheit (149 degrees Celsius) and the temperature of the heated cove bending rod is between about 205 and 215 degrees Fahrenheit (96 to 102 degrees Celsius) during the step of bending.
